(19) **Europäisches Patentamt**
**European Patent Office**
**Office européen des brevets**

(11) **EP 3 400 576 B1**

(12) **FASCICULE DE BREVET EUROPEEN**

(45) Date de publication et mention de la délivrance du brevet:
**07.07.2021 Bulletin 2021/27**

(51) Int Cl.:
*G06T 7/10* *(2017.01)* *G06T 11/00* *(2006.01)*
*G06K 9/46* *(2006.01)* *G06K 9/38* *(2006.01)*

(21) Numéro de dépôt: **16836082.4**

(22) Date de dépôt: **30.12.2016**

(86) Numéro de dépôt international:
**PCT/FR2016/000217**

(87) Numéro de publication internationale:
**WO 2017/118782 (13.07.2017 Gazette 2017/28)**

(54) **PROCÉDÉ DE TRAITEMENT GRAPHIQUE D'IMAGES**

VERFAHREN ZUR GRAFISCHEN VERARBEITUNG VON BILDERN

METHOD FOR THE GRAPHICS PROCESSING OF IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1650004**

(43) Date de publication de la demande:
**14.11.2018 Bulletin 2018/46**

(73) Titulaire: **LAOVILAND EXPERIENCE**
**34990 Juvignac (FR)**

(72) Inventeurs:
• **TCHOUMOU, Jean-Thierry**
**34990 Juvignac (FR)**
• **TCHOUMOU, Pascal**
**34990 Juvignac (FR)**
• **RODRIGUEZ-TORRECILLAS, Matthias**
**34470 Perols (FR)**
• **JAULMES, Boris**
**34500 Béziers (FR)**

(74) Mandataire: **Rhein, Alain**
**Cabinet BREV&SUD**
**55 Avenue Clément Ader**
**34170 Castelnau le Lez (FR)**

(56) Documents cités:
**US-A1- 2011 229 025**

• **RADHAKRISHNA ACHANTA ET AL: "Salient Region Detection and Segmentation", 12 mai 2008 (2008-05-12), COMPUTER VISION SYSTEMS; [LECTURE NOTES IN COMPUTER SCIENCE], SPRINGER BERLIN HEIDELBERG, BERLIN, HEIDELBERG, PAGE(S) 66 - 75, XP019088821, ISBN: 978-3-540-79546-9 section 3.1 Saliency Calculation et section 3.2 Whole Object Segmentation Using Saliency Maps**
• **VIDYA SETLUR ET AL: "Automatic Stained Glass Rendering", 1 janvier 2006 (2006-01-01), ADVANCES IN COMPUTER GRAPHICS LECTURE NOTES IN COMPUTER SCIENCE;;LNCS, SPRINGER, BERLIN, DE, PAGE(S) 682 - 691, XP019041388, ISBN: 978-3-540-35638-7 le document en entier**
• **WU ZHIPENG ET AL: "Saliency Detection-Based Mixture of Reality and Non-Photorealistic Rendering Effects for Artistic Visualization", 13 décembre 2013 (2013-12-13), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 678 - 689, XP047267990, ISSN: 0302-9743 ISBN: 978-3-642-34346-9 le document en entier**
• **JAN ERIC KYPRIANIDIS ET AL: "State of the Art: A Taxonomy of Artistic Stylization Techniques for Images and Video", IEEE TRANSACTIONS ON VISUALIZATION AND COMPUTER GRAPHICS, IEEE SERVICE CENTER, LOS ALAMITOS, CA, US, vol. 19, no. 5, 1 mai 2013 (2013-05-01), pages 866-885, XP011497433, ISSN: 1077-2626, DOI: 10.1109/TVCG.2012.160**

EP 3 400 576 B1

## Description

La présente invention a trait à un procédé automatisé de traitement graphique d'images permettant de booster et/ou de fluidifier l'inspiration de créateurs de représentations graphiques à partir de quelques points d'entrée. L'idée est d'extraire de la matière graphique à partir d'images existantes, sous des formes diverses et pour des traitements automatisés variés, afin d'accompagner un processus imaginatif non structuré. Le procédé conduit à amplifier grâce à des moyens techniques de traitement l'apport artistique et personnel d'une personne.

Cette matière graphique à partir de laquelle est bâtie à l'aide de moyens automatisés une ambiance visuelle stimulant l'imaginaire du créateur est tirée de fichiers d'images sources stockées en mémoire d'un système de traitement électronique de données. Des éléments particuliers peuvent en être extraits par divers traitements automatisés pour fournir à l'utilisateur une base de travail aisément modelable. Exprimé différemment, un fichier image source est fourni par le système dans le but d'être travaillé, fournissant la base d'un processus graphique intégrant des objets virtuels recombinables et modifiables à l'infini par traitement informatique, au gré de l'inspiration du créateur qui est accompagné par ce traitement en vue de créer des nouvelles représentations graphiques reflétant sa créativité propre.

En réalité, ce sont des traitements techniques informatiques appliqués à l'image source qui permettent de la transformer par étapes, des accès utilisateur permettant de graduer ou d'influer sur la nature et l'amplitude des traitements à vocation graphique mis en œuvre, traitements par ailleurs largement automatisés. Wu Zhipeng et al.: "Saliency Detection-Based Mixture of Reality and Non-Photorealistic Rendering Effects for Artistic Visualization", 13 décembre 2013 et Jan Eric Kyprianidis et al: "State of the Art: A Taxonomy of Artistic Stylization Techniques for Images and Video",IEEE Ttransactions on Visualization and Computer Graphics décrivent par exemple de tels traitements informatiques, dit de "stylisation". Ces traitements se basent généralement sur une première étape de segmentation, telle que décrite par exemple dans Radhakrishna Achanta et al: "Salient Region Détection and Segmentation", 12 mai 2008, suivie d'une étape de remplissage telle que décrite par exemple dans Vidya Setlur et al: "Automatic Stained Glass Rendering", 1 janvier 2006.

Le procédé selon l'invention, qui permet donc des traitements graphiques d'images à partir de fichiers d'images sources existants, constituant en pratique une base de données de laquelle une image est extraite pour lesdits traitements graphiques, est tel qu'il comporte les étapes divulguées dans la revendication 1.

Les coefficients de saillance $A_i$ sont ceux qui permettent en pratique de caractériser l'identité visuelle de l'image, par graduation de chaque critère de saillance, c'est-à-dire en fait de chaque paramètre optique sur lequel le traitement de saillance porte : ceux-ci sont par exemple l'intensité, l'orientation, les couleurs, la saturation, etc.

La première étape de saillance vise donc de fait à représenter les points saillants d'une image selon différents critères, en identifiant et en isolant en substance les zones qui attireraient naturellement l'attention d'un œil humain.

En d'autres termes, il s'agit de se caler sur des stimulations auxquelles le cerveau et plus précisément le système nerveux humain sont plus naturellement réceptifs, et de les simuler le plus fidèlement possible par traitement automatisé. Selon l'invention, l'automatisation a essentiellement porté sur des facteurs de saillance qui sollicitent l'attention sensorielle humaine de manière très instinctive, comme le contraste des couleurs, la taille des objets ou encore leur luminosité. Les facteurs qui mobilisent des processus plus profonds, liés par exemple à l'histoire de l'observateur et à son expérience, ne sont pas ou peu utilisés dans l'invention.

L'information, dans la première étape du procédé de l'invention, est en substance découpée en plusieurs « cartes » d'information désignées dans la suite par le vocable cartes de saillance, chacune concentrant un traitement basé sur un paramètre tel que ceux qui ont été mentionnés auparavant : couleur, saturation, intensité, orientations de l'image...On obtient en fait plusieurs cartes de données à partir de l'unique image source, isolant chacune des informations représentatives d'un filtrage centré sur un des paramètres ou critères mentionnés. La constitution des cartes de saillance revient donc de fait à extraire différents types d'informations utiles pour la suite du procédé, à la manière des composantes d'un vecteur.

Cette décomposition selon une base de critères prédéterminée est suivie, dans une seconde étape, d'un fusionnement des informations obéissant à une logique particulière pour obtenir une carte finale de saillance, c'est-à-dire une carte de données dans laquelle les informations issues des traitements de saillance de base sont regroupées. Il s'agit en l'occurrence et plus précisément d'une combinaison linéaire qui réalise en quelque sorte une moyenne pondérée par les n coefficients de saillance $A_i$, ceux-ci étant évidemment modifiables pour faire varier le traitement électronique. La variabilité des coefficients de saillance $A_i$ a pour objet d'impliquer plus ou moins et de manière distincte les différents critères optiques utilisés pour le traitement de saillance. En fait, lesdits coefficients de saillance $A_i$, qui sont comme mentionné des variables réelles comprises entre 0 et 1, reflètent l'importance relative de chaque critère de saillance dans la carte de saillance résultante. On comprend bien que leur modulation permet de faire varier à l'infini les résultats graphiques obtenus à l'issue du traitement de saillance.

L'étape réalisant ensuite un premier seuillage, résultant aussi en une carte c'est-à-dire en un ensemble d'informations, produit en l'espèce une carte binaire, c'est-à-dire qu'elle conduit à une image binarisée, avec des zones exclusivement de deux couleurs blanche ou noire. On peut considérer qu'il s'agit d'une forme d'aboutissement du processus de saillance, qui met en exergue les zones retenues (blanches) par rapport à un fond dont le critère de représentation est inversé (noir).

La vectorisation qui s'ensuit, dans le procédé de l'invention, conduit à différencier les diverses zones de saillance blanches, dénommés groupes, pour les affecter à un « calque » de travail correspondant au premier plan, qui est distinct du fond, lequel constitue dès lors l'arrière-plan. A partir de cette étape, le travail sur la matière visuelle de création devient exclusivement vectoriel.

Au cours de cette étape de vectorisation, les différents groupes sont labellisés pour être indexés afin de leur donner une identité unique en vue de les traiter, selon les routines automatisées du procédé de l'invention, de manière individualisée. Cet indexage sera expliqué plus en détail dans la suite.

Le seuil constituant le paramètre de seuillage utilisé dans l'étape éponyme est une variable qui est sélectionnable par l'utilisateur, lequel fixe une valeur convenable pour lui à partir de laquelle l'ensemble du traitement est effectué.

C'est également à ce stade que s'effectue, pour chaque groupe du premier plan, le calcul de la moyenne de teinte qui lui correspond, sur la base de la fraction de l'image originale du fichier source remplissant une tache de même forme, de même surface et de même emplacement que ce groupe. En d'autres termes, ce calcul est réalisé à partir d'une portion d'image délimitée dans l'image source par le contour de la tache constituant le groupe, en prenant la teinte de chaque pixel de cette fraction d'image et en effectuant finalement une moyenne des teintes de tous les pixels de ladite fraction d'image. Cette moyenne de teinte est stockée en mémoire par le système, pour être utilisée dans une éventuelle phase de traitement ultérieure.

En une étape suivante, selon le procédé de la présente invention, les zones blanches ou groupes sont remplis au cours d'un processus de colorisation ou de texturage.

L'image originale, ou image source, à partir de laquelle on part et sur laquelle s'effectue le traitement automatisé propre au procédé de l'invention, est finalement transformée de sorte que le résultat est visuellement totalement différent du visuel initial, suite aux étapes de traitement mises en œuvre et qui ont été évoquées ci-dessus. L'ensemble offre une assistance puissante à l'inspiration en proposant des solutions graphiques créatives et originales par traitements informatiques automatisés successifs et modulables.

Le procédé de l'invention permet de fait de multiples adaptations et variantes élargissant son domaine de possibilités : en particulier, au moins un critère de saillance à la base d'un traitement de saillance peut être inversé dans la première étape. Cela conduit à inverser les résultats obtenus par le traitement de saillance concerné.

Par ailleurs, le seuil établi pour le premier seuillage peut être variable, ce qui conduit à une infinité de résultats visuels possibles.

Selon une possibilité, une autre étape peut être mise en œuvre au cours du procédé, soit à la suite soit en parallèle au premier seuillage, sous la forme d'un second seuillage dont la valeur du seuil est choisie à un niveau très voisin du seuil sélectionné pour le premier seuillage, dont on peut noter qu'il peut être légèrement supérieur ou légèrement inférieur. Une différenciation des pixels blancs issus des deux seuillages conduit ensuite à identifier un ensemble de pixels périphériques permettant la détermination du contour des taches blanches issues du premier seuillage.

Selon encore une autre possibilité couverte par le procédé de l'invention, à l'issue de la phase de vectorisation précédente, une étape supplémentaire consistant en une inversion de couleur des taches noires et blanches peut être implémentée. Il s'agit en fait d'une inversion du premier plan et de l'arrière-plan. En variante, l'arrière-plan noir peut également être retiré et rester transparent.

L'étape de remplissage de chaque groupe s'effectue, selon l'invention, par sélection d'une pluralité de modes comportant au moins un mode image, un mode couleur, un mode teinte et un mode noir et blanc. Il ne s'agit cependant nullement d'une liste limitative au sens de l'invention, l'étape consistant techniquement essentiellement en un remplissage, le mode de remplissage pouvant évidemment être différent de ceux qui sont mentionnés à titre d'exemples.

En particulier, le mode image consiste à remplir un groupe donné par la fraction d'image issu du fichier source qui a la même forme, la même surface que le groupe et correspond à l'emplacement de ce groupe dans l'image source. Le mode couleur peut quant à lui consister à remplir un groupe donné par une couleur unie déterminée par un processus aléatoire conduit par le système.

Le mode teinte peut quant à lui être réalisé par remplissage d'un groupe donné par la teinte moyenne mémorisée pour ce groupe, et enfin le mode noir et blanc peut consister à remplir un groupe donné par du blanc.

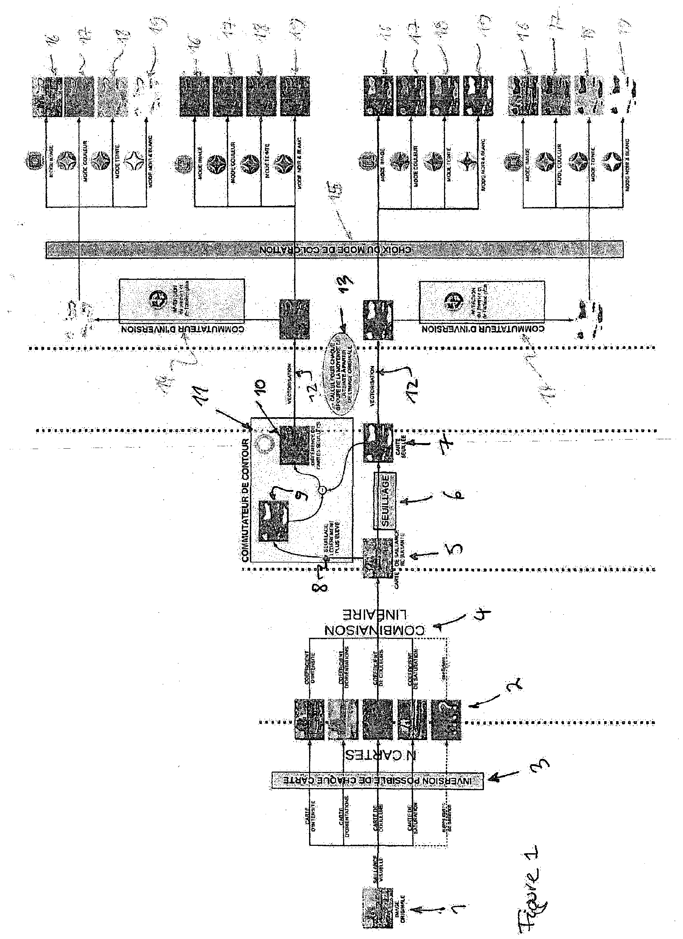

L'invention va à présent être décrite plus en détail, en référence à la figure 1 annexée, qui représente très schématiquement un exemple d'arborescence des différentes étapes principales et secondaires qui peuvent être mises en œuvre par le procédé de l'invention.

En référence à cette figure 1, l'image originale (1) apparaissant en partie gauche de la figure fait d'abord l'objet de plusieurs traitements de saillance visuelle parallèles centrés sur des critères de saillance distincts et aboutissant à différentes cartes (2). Ces cartes (2) sont des regroupements d'informations post-traitement individualisés. Dans l'exemple représenté en figure 1, les critères de saillance retenus sont l'intensité, les orientations, les couleurs, la saturation, mais ce ne sont là que des exemples possibles comme l'illustre la carte de saillance placée en bas à gauche, dont le critère n'est pas attribué. Il est à noter que tous ces critères de saillance peuvent être inversés en (3), aboutissant à ce qu'il est convenu d'appeler une inversion des cartes (2), mise en œuvre individuellement le cas échéant pour chaque traitement de saillance effectué en parallèle.

Selon une étape de calcul ultérieure, une combinaison linéaire (4) aboutit à une carte de saillance unique (5), qui est en fait la résultante par la combinaison linéaire des traitements réalisés pour chaque carte (2). Il s'agit en réalité d'une moyenne des critères de saillance pondérée par les coefficients de saillance $A_i$ attribués à chacun de ces critères. Cette carte de saillance est un ensemble de données qui reflète les différents calculs de saillance par critères et les pondérations données auxdits critères.

Cet ensemble de données est soumis à un premier traitement de seuillage (6) aboutissant à une première carte seuillée (7), l'opération de seuillage étant en l'espèce réalisée selon un premier seuil. Le résultat est une binarisation de l'image donnant lieu à des zones de deux teintes seulement, noires et blanches. Les taches blanches correspondent en pratique aux zones qui sont en dessus du premier seuil, et sont remplies de blanc après le traitement de « filtrage » que représente ledit seuillage. Le premier seuil est en l'occurrence variable, la variation de ce paramètre étant accessible à l'utilisateur. Le fond noir correspond aux parties qui sont en dessous dudit premier seuil, et constituent en pratique le fond de l'image seuillée.

Parallèlement, un second seuillage (8) tributaire d'un seuil légèrement différent, en l'occurrence légèrement plus élevé, est mis en place, donnant une seconde carte seuillée (9) dont les taches blanches sont un peu moins grandes du fait de la très petite élévation du seuil. Une différence entre les deux cartes seuillées (7, 9) a pour résultat une carte de contour (10), puisque le résultat de ladite différence s'analyse alors en un contour externe des taches dont les surfaces sont les plus réduites (celles issues du premier seuillage moins élevé). L'opération de différence est réalisée dans ce qu'il est convenu d'appeler un commutateur de contour (11) qui n'est pas toujours actionné, mais constitue une option du système.

En sortie des opérations de seuillage, une vectorisation (12) est mise en œuvre, qui permet la constitution des groupes par individualisation des taches dans les images seuillées. Un indexage de mise en œuvre de l'individualisation des zones est réalisé par un double balayage qui donne un label ou qui étiquette chaque pixel et l'assemble à un groupe constitué. Ce double balayage est effectué de la manière suivante : Les pixels ou éléments de l'image sont parcourus par colonnes, puis par lignes au cours d'un premier balayage. Si le pixel ou l'élément examiné n'appartient pas au fond, ses voisins localisés directement au-dessus et directement à gauche sont examinés et, s'ils appartiennent au fond, un nouveau label d'identification est créé. Sinon, on prend le label le plus petit des voisins et on l'affecte à ce pixel nouvellement identifié. Cette affectation, et l'équivalence entre les deux labels voisins, est enregistrée. Au cours de la seconde passe, les lignes et colonnes sont à nouveau parcourues, et si un pixel ou élément examiné n'appartient pas au fond, on lui réaffecte un label en prenant le plus petit label équivalent.

Tous les traitements ultérieurs deviennent vectoriels, à partir de cette étape. Pour chaque groupe, un calcul (13) est effectué par le système, pour déterminer la teinte du groupe par détermination de la moyenne des teintes des pixels de l'équivalent (forme, surface et emplacement) du groupe dans l'image source. Ladite teinte est stockée en mémoire par le système.

Un commutateur d'inversion (14) peut être actionné à ce stade, c'est-à-dire après la vectorisation obtenue en l'étape (12). Il provoque l'inversion du premier plan et de l'arrière-plan, autant pour l'image des contours si un contourage a été mis en oeuvre via le commutateur de contour (11) (voir en haut de la figure) que pour celle des groupes figurant les taches en l'absence d'un tel contourage (voir en partie basse de la figure).

En l'absence d'inversion, mais également si elle a lieu, l'étape suivante du procédé consiste à un remplissage (15) des taches ou groupes de l'image, par sélection d'un parmi une pluralité de modes de remplissage. A titre d'exemple, on citera sans que cela soit exhaustif un mode image (16), un mode couleur (17), un mode teinte (18) et un mode noir et blanc (19).

Le mode image (16) consiste à remplir un groupe par un morceau d'image bien défini et n'a qu'une origine possible : il est en pratique issu du fichier source et présente la même forme, la même surface que le groupe et dont l'emplacement dans l'image source correspond à l'emplacement du groupe dans l'image en cours de traitement.

Le mode couleur (17) utilise une couleur unie, déterminée par un processus aléatoire dans le cadre du procédé de l'invention, pour remplir un groupe donné.

Le mode teinte (18) procède au remplissage d'un groupe par la teinte moyenne mémorisée pour ce groupe, comme indiqué auparavant. Enfin, le mode noir et blanc (19) consiste très simplement à remplir un groupe donné par du blanc.

L'invention ne se limite bien entendu pas aux exemples décrits et expliqués en référence aux figures, mais elle englobe les variantes et versions qui entrent dans la portée des revendications.

**Revendications**

1. Procédé de traitement graphique d'images à partir de fichiers d'images sources existants constituant une base de données de laquelle une image est extraite pour lesdits traitements graphiques, comportant les étapes suivantes :

- mise en œuvre de n (n ≥ 1) traitements de saillance visuelle sur un fichier image source sélectionné, basés sur n critères de saillance prédéterminés, en vue de constituer n cartes de saillance CSi, avec i = 1 à n ;
- réalisation d'une combinaison linéaire réalisée pour l'obtention d'une unique carte de saillance résultante ;
- réalisation d'un premier seuillage sur la carte de saillance résultante, générant une carte seuillée binaire créant des taches de saillance blanches et noires selon qu'elles sont respectivement au-dessus et en dessous d'une valeur seuil ;
- affectation des taches de saillance blanches à un ensemble défini comme étant le premier plan ;
- différenciation des diverses taches de saillance blanches générant une individualisation des taches, chaque tache étant définie comme un groupe ;
- détermination de la moyenne des teintes des pixels de chaque zone de l'image source correspondant à un groupe et stockage en mémoire de cette teinte moyenne pour chaque groupe ;
- remplissage des groupes avec une couleur unie ou une texture ;

**caractérisé en ce que** ladite combinaison linéaire est la suivante : $\dfrac{\sum_{i=1}^{n} Ai.CSi}{\sum_{i=1}^{n} Ai}$ , les coefficients de saillance Ai étant des variables réelles comprises entre 0 et 1 et **en ce qu'**un second seuillage est réalisé, dont le seuil est de niveau voisin du seuil sélectionné pour le premier seuillage, une différenciation des pixels blancs issus des deux seuillages conduisant à un ensemble de pixels permettant le calcul d'un contourage des taches blanches issues du premier seuillage.

2. Procédé de traitement graphique d'images selon la revendication précédente, **caractérisé en ce que** le seuil établi pour le premier seuillage est variable.

3. Procédé de traitement graphique d'images selon l'une des revendications précédentes, **caractérisé en ce qu'**à l'issue de la phase de différentiation, une inversion de couleur des taches noires et blanches est implémentée.

4. Procédé de traitement graphique d'images selon l'une des revendications précédentes, **caractérisé en ce qu'**à l'issue de la phase de différentiation, l'arrière-plan noir est retiré et reste transparent.

5. Procédé de traitement graphique d'images selon l'une des revendications précédentes, **caractérisé en ce que** le remplissage de chaque groupe s'effectue par sélection d'une pluralité de modes comportant au moins : un mode image consistant à remplir un groupe donné par une fraction d'image issu du fichier source, un mode couleur consistant à remplir un groupe donné par une couleur unie, un mode teinte réalisé par remplissage d'un groupe donné par une teinte moyenne mémorisée pour ce groupe et un mode noir et blanc consistant à remplir un groupe donné par du blanc.

6. Procédé de traitement graphique d'images selon la revendication précédente, **caractérisé en ce que** le mode image consiste à remplir un groupe donné par le morceau d'image issu du fichier source qui a la même forme, la même surface que le groupe et correspond à l'emplacement de ce groupe dans l'image source.

7. Procédé de traitement graphique d'images selon la revendication 6, **caractérisé en ce que** le mode couleur consiste à remplir un groupe donné par une couleur unie déterminée par un processus aléatoire.

**Patentansprüche**

1. Verfahren zur grafischen Verarbeitung von Bildern aus vorhandenen Quellbilddateien, die eine Datenbank bilden, aus der ein Bild für die grafischen Verarbeitungen extrahiert wird, umfassend die folgenden Schritte:

- Implementierung von n (n ≥ 1) visuellen Ausprägungsverarbeitungen auf einer ausgewählten Quellbilddatei, die auf n vorbestimmten Ausprägungskriterien basieren, zum Bilden von n Ausprägungskarten Csi, mit i = 1 bis n;
- Durchführung einer linearen Kombination, um eine einzelne resultierende Ausprägungskarte zu erhalten;
- Durchführung einer ersten Schwellenwertbildung für die resultierende Ausprägungskarte, die eine binäre Schwellenwertkarte erzeugt, die weiße und schwarze Ausprägungsflecken schafft, je nach dem sie über bzw. unter einem Schwellenwert liegen;
- Zuordnung der weißen Ausprägungsflecken zu einer Gesamtheit, die als Vordergrund definiert wird,
- Differenzierung der verschiedenen weißen Ausprägungsflecken, die eine Individualisierung der Flecken erzeugt, wobei jeder Fleck als Gruppe definiert wird;
- Bestimmung des Durchschnitts der Farbtöne der Pixel jedes Bereichs des einer Gruppe entsprechenden Quellbildes und Speicherung dieses Durchschnittsfarbtons für jede Gruppe;
- Füllen der Gruppen mit einer einheitlichen Farbe oder einer Textur;

**dadurch gekennzeichnet, dass** die besagte lineare Kombination wie folgt ist:

$$\frac{\sum_{i=1}^{n} Ai.CSi}{\sum_{i=1}^{n} Ai},$$

wobei die Ausprägungs-Koeffizienten Ai reelle Variablen zwischen 0 und 1 sind, und wobei eine zweite Schwellenwertbildung durchgeführt wird, deren Schwellenwert auf einem Niveau nahe dem für die erste Schwellenwertbildung ausgewählten Schwellenwert liegt, wobei eine Differenzierung der weißen Pixel aus den beiden Schwellenwertbildungen zu einer Reihe von Pixeln führt, die die Berechnung einer Konturierung der weißen Flecken, die sich aus der ersten Schwellenwertbildung ergeben, ermöglicht.

2. Verfahren zur grafischen Verarbeitung von Bildern nach dem vorhergehenden Anspruch, **dadurch gekennzeichnet, dass** der für die erste Schwellenwertbildung festgelegte Schwellenwert variabel ist.

3. Verfahren zur grafischen Verarbeitung von Bildern nach einem der vorhergehenden Ansprüche, **dadurch gekennzeichnet, dass** am Ende der Differenzierungsphase eine Farbinversion der schwarzen und weißen Flecken implementiert wird.

4. Verfahren zur grafischen Verarbeitung von Bildern nach einem der vorhergehenden Ansprüche, **dadurch gekennzeichnet, dass** am Ende der Differenzierungsphase der schwarze Hintergrund entfernt wird und transparent bleibt.

5. Verfahren zur grafischen Verarbeitung von Bildern nach einem der vorhergehenden Ansprüche, **dadurch gekennzeichnet, dass** das Füllen jeder Gruppe durch Auswählen einer Vielzahl von Modi durchgeführt wird, die mindestens Folgendes umfassen: einen Bildmodus, der darin besteht, eine gegebene Gruppe mit einem Bruchteil eines Bildes aus der Quelldatei zu füllen, einen Farbmodus, der darin besteht, eine gegebene Gruppe mit einer einheitlichen Farbe zu füllen, einen Farbtonmodus, der durch Füllen einer gegebenen Gruppe mit einem für diese Gruppe gespeicherten durchschnittlichen Farbton durchgeführt wird, und einen Schwarzweißmodus, der darin besteht, eine bestimmte Gruppe mit Weiss zu füllen.

6. Verfahren zur grafischen Verarbeitung von Bildern nach dem vorhergehenden Anspruch, **dadurch gekennzeichnet, dass** der Bildmodus darin besteht, eine gegebene Gruppe mit dem Bildteil aus der Quelldatei zu füllen, der die gleiche Form, die gleiche Oberfläche wie die Gruppe hat, und der Lage dieser Gruppe im Quellbild entspricht.

7. Verfahren zur grafischen Verarbeitung von Bildern nach Anspruch 6, **dadurch gekennzeichnet, dass** der Farbmodus darin besteht, eine gegebene Gruppe mit einer durch einen zufälligen Prozess bestimmten einheitlichen Farbe zu füllen.

## Claims

1. A method for graphically processing images from existing source image files forming a database from which an image is extracted for said graphic processing operations, wherein it comprises the following steps:

   - implementing n (n ≥ 1) visual saliency processing operations on a selected source image file, based on n predetermined saliency criteria, in order to form n saliency cards $CS_i$, where i = 1 to n;
   - performing a linear combination in order to obtain a single resulting saliency card;
   - performing a first thresholding on the resulting saliency card, generating a binary thresholded card creating white and black saliency spots depending on whether they are respectively above and below a threshold value;
   - assigning white spots to a set defined as the foreground;
   - differentiating the white saliency spots to generate an individualization of the spots, each spot being defined as a group;
   - determining the average of the hues of the pixels of each area of the source image corresponding to a group and storing in the memory this average hue for each group;
   - filling the groups with a solid color or a texture;

   **characterized in that** the linear combination is the

   following one : $\frac{\nabla_{i=1}^{n} Ai.SCi}{\sum_{i=1}^{n} Ai},$ the saliency coefficients $A_i$ being real variables varying between 0 and 1, and **in that** a second thresholding is performed, the threshold of which is at a level close to the threshold selected for the first thresholding, a differentiation of the white pixels resulting from the two thresholds leading to a set of pixels permitting the calculation of a contouring of the white spots resulting from the first thresholding.

2. The method for graphic image processing according to the preceding claim, **characterized in that** the threshold set for the first thresholding is varying.

3.  The method for graphic image processing according to one of the preceding claims, **characterized in that** at the end of the differentiation phase, a color inversion of the black and white spots is implemented.

4.  The method for graphic image processing according to one of the preceding claims, **characterized in that** at the end of the differentiation phase, the black background is removed and remains transparent.

5.  The method for graphic image processing according to one of the preceding claims, **characterized in that** the filling of each group is performed by selecting a plurality of modes including at least: an image mode consisting in filling a given group by the image portion resulting from the source file, a color mode consisting in filling a given group with a solid color, a hue mode consisting in filling a given group with the average hue stored in memory for this group and a black and white mode consisting in filling a given group with white.

6.  The method for graphic image processing according to the preceding claim, **characterized in that** the image mode consists in filling a given group by the image portion resulting from the source file which has the same shape, the same surface area as the group and corresponds to the location of this group in the source image.

7.  The method for graphic image processing according to claim 6, **characterized in that** the color mode consists in filling a given group with a solid color determined by a random process.

Figure 1

## RÉFÉRENCES CITÉES DANS LA DESCRIPTION

**Littérature non-brevet citée dans la description**

- **WU ZHIPENG et al.** *Saliency Detection-Based Mixture of Reality and Non-Photorealistic Rendering Effects for Artistic Visualization,* 13 Décembre 2013
- **JAN ERIC KYPRIANIDIS et al.** State of the Art: A Taxonomy of Artistic Stylization Techniques for Images and Video. *IEEE Ttransactions on Visualization and Computer Graphics*
- **RADHAKRISHNA ACHANTA et al.** *Salient Region Détection and Segmentation,* 12 Mai 2008
- **VIDYA SETLUR et al.** *Automatic Stained Glass Rendering,* 01 Janvier 2006